Europäisches Patentamt

European Patent Office

Office européen des brevets

(11) Numéro de publication: **0 298 825 B1**

## (12) FASCICULE DE BREVET EUROPEEN

(45) Date de publication de fascicule du brevet: **15.04.92**  (51) Int. Cl.⁵: **H02G 3/04**

(21) Numéro de dépôt: **88401605.6**

(22) Date de dépôt: **24.06.88**

(54) Chemin de câbles en treillis soudé.

(30) Priorité: **26.06.87 FR 8709046**

(43) Date de publication de la demande:
**11.01.89 Bulletin 89/02**

(45) Mention de la délivrance du brevet:
**15.04.92 Bulletin 92/16**

(84) Etats contractants désignés:
**AT BE CH DE ES FR GB GR IT LI LU NL SE**

(56) Documents cités:
**EP-A- 0 191 667**
**DE-B- 2 141 849**

(73) Titulaire: **LE METAL DEPLOYE, Société Anonyme dite:**
**383, avenue du Général de Gaulle**
**F-92140 Clamart(FR)**

(72) Inventeur: **Bernard, Gérard**
**12, rue André Theuriet**
**F-92340 Bourg La Reine(FR)**
Inventeur: **Durin, Michel**
**3, rue Jean Moulin**
**F-78210 Saint-Cyr-L'Ecole(FR)**

(74) Mandataire: **Nony, Michel et al**
**Cabinet NONY & CIE, 29, rue Cambacérès**
**F-75008 Paris(FR)**

## Description

La présente invention est relative à un chemin de câbles perfectionné en treillis soudé.

Il est connu de réaliser des chemins de câbles ou goulottes en assemblant des fils d'acier longitudinaux sur des fils d'acier transversaux ayant la forme d'un U.

De tels chemins de câbles sont réalisés à partir de treillis métalliques obtenus par soudure d'une première nappe de fils longitudinaux sur laquelle on applique une seconde nappe de fils transversaux qui sont disposés tangentiellement à angle droit. Les fils de la nappe transversale sont ensuite repliés en forme de U pour obtenir le chemin de câbles.

Il résulte de cette technique de fabrication connue que les rives supérieures des parties latérales de ces chemins de câbles sont constituées par un fil longitudinal qui est maintenu tangentiellement au voisinage de l'extrémité de plusieurs fils transversaux.

Cela a pour conséquence que, même en prenant soin de découper proprement les extrémités des fils transversaux, il est difficile que ces dernières ne présentent pas des arêtes coupantes qui risquent d'endommager les câbles électriques lors de leur mise en place sur le chemin de câbles.

On connaît d'après le document DE-A-2 141 849 un chemin de câbles réalisé en éléments métalliques soudés dans lequel les parties verticales comportent un élément longitudinal vertical soudé sur des plaquettes disposées sensiblement dans le plan de l'axe de l'élément de rive. Ces chemins de câbles ne comportent pas de fils soudés sur le côté des plaquettes verticales.

La présente invention concerne un chemin de câbles perfectionné qui remédie à ces inconvénients d'une façon simple et économique.

La présente invention a pour objet un chemin de câbles tel que défini à la revendication 1.

Selon un premier mode de réalisation de l'invention, les fils de rive longitudinaux sont directement soudés sur les extrémités des fils transversaux, mais en outre, les parties terminales des fils transversaux sont repliées de manière à ce que les fils longitudinaux de rive soient situés dans le même plan vertical que les autres fils longitudinaux des parties verticales du chemin de câbles.

Comme d'une manière générale les chemins de câbles en treillis soudé sont le plus souvent réalisés de manière à ce que les éléments transversaux en U soient à l'intérieur du chemin de câbles, tandis que les éléments longitudinaux sont situés à l'extérieur, dans ce mode de réalisation de l'invention les extrémités, supérieures des fils transversaux sont donc en général déportées vers l'extérieur du chemin de câbles d'une distance qui correspond sensiblement au diamètre des fils longitudinaux des parties verticales du chemin de câbles.

Selon un second mode de réalisation de l'invention, les fils transversaux gardent leur profil en U traditionnel, mais les fils longitudinaux de rive qui sont soudés à l'extrémité des fils transversaux sont déformés au niveau de chacun des fils transversaux pour que sur la plus grande partie de leur longueur ces fils de rive soient disposés dans le même plan vertical que les autres fils longitudinaux des parties verticales du chemin de câbles, tandis qu'au droit des fils transversaux, ces fils longitudinaux de rive sont déportés d'une distance correspondant sensiblement au diamètre des autres fils longitudinaux afin que la soudure des fils de rive longitudinaux puisse s'effectuer sur l'extrémité des fils transversaux avec concordance des axes de ces fils au droit des soudures.

Dans une variante de ce second mode de réalisation les fils de rives sont déportés pour venir dans le même plan vertical que les autres fils longitudinaux des parties verticales du chemin de câbles, seulement en certains endroits de leur longueur pour permettre l'insertion d'éclisses de liaison entre le fil de rive et le fil longitudinal qui lui est contigu.

Cette variante permet ainsi de réunir les éléments de chemin de câbles avec des éclisses de types connus.

Ces deux modes de réalisation de l'invention présentent l'avantage que, lorsqu'après avoir découpé l'ensemble des fils longitudinaux à l'exception de ceux qui se trouvent sur une des parties verticales du chemin de câbles, on déforme ces fils longitudinaux restant pour les enrouler autour d'un axe vertical, le fond du chemin de câbles reste dans le même plan horizontal, ce qui ne serait pas le cas si tous les fils longitudinaux se trouvant sur un même côté du chemin de câbles n'étaient pas placés dans un même plan vertical.

De plus le premier mode de réalisation et la première variante du second mode de réalisation présentent l'avantage de permettre un empilage des éléments qui s'engagent les uns dans les autres à condition de les décaler légèrement dans le sens de leur longueur.

Les chemins de câbles selon le second mode de réalisation présentent également l'avantage de pouvoir en réunir les différentes sections par des éclisses de types connus qui s'engagent entre les fils de rives et les fils longitudinaux voisins.

Les différentes sections de chemin de câbles selon l'invention peuvent être réunies par des moyens conventionnels, notamment à l'aide d'éclisses, qui sont engagées entre deux fils longitudinaux des côtés du chemin de câbles.

Dans le but de mieux faire comprendre l'invention on va en décrire maintenant à titre d'illustration et sans aucun caractère limitatif, deux modes de réalisation pris comme exemples et représentés sur le dessin annexé dans lequel :

- la figure 1 est une vue en perspective d'une ébauche du premier mode de réalisation de l'invention, dans laquelle les extrémités des fils transversaux n'ont pas encore été repliées,
- la figure 2 est une vue en perspective du premier mode de réalisation de l'invention,
- la figure 3 est une vue en coupe d'un second mode de réalisation de l'invention selon III-III de la figure 4,
- la figure 4 est une vue de dessus de la figure 3.
- la figure 5 est une vue de dessus d'une variante de la figure 4, et
- la figure 6 est une vue en élévation de deux éléments de chemin de câbles selon la figure 5 qui sont réunis par des éclisses.

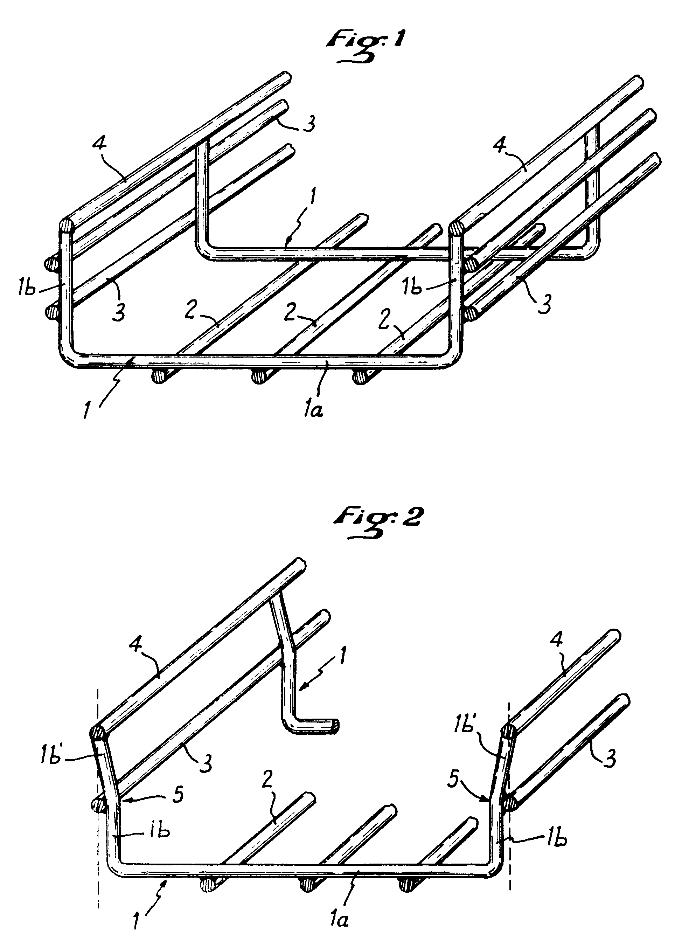

On voit sur la figure 1 les éléments transversaux 1 qui sont constitués par des fils d'acier dont la partie centrale horizontale 1a est prolongée par des parties verticales 1b.

Des fils d'acier longitudinaux 2 sont soudés tangentiellement en dessous de la partie centrale 1a des fils transversaux 1 et des fils d'acier longitudinaux 3 sont soudés tangentiellement à l'extérieur des parties verticales 1b des fils transversaux, comme cela est actuellement connu pour les chemins de câbles en treillis métallique soudé.

Les fils longitudinaux de rive 4 sont soudés directement sur l'extrémité des parties verticales 1b des fils transversaux, les axes des fils longitudinaux de rive 4 étant situés sensiblement dans le même plan vertical que les axes des parties verticales 1b des fils transversaux 1.

Le chemin de câbles selon le première mode de réalisation de l'invention, qui est représenté sur la figure 2, comporte un fil longitudinal de rive 4 qui est situé au dessus de l'extrémité des fils transversaux 1 (et non de manière adjacente comme cela était connu antérieurement) mais de surcroit les parties supérieures 1b' des parties latérales 1b des fils transversaux 1 sont repliées vers l'extérieur en 5 de manière à ce que les axes des fils de rive 4 soient situés sensiblement dans un même plan vertical que les axes des autres fils longitudinaux 3 qui sont soudés tangentiellement sur les parties verticales 1b des fils transversaux 1.

On a représenté schématiquement en trait interrompu les plans verticaux qui contiennent les axes des fils longitudinaux 3 et 4.

Dans le mode de réalisation de la figure 2, les fils longitudinaux 2 et 3 sont situés à l'extérieur des fils transversaux 1 comme cela est habituellement le cas pour les chemins de câbles.

Il va de soi dans le cas où les fils longitudinaux 3 (autres que les fils de rive 4) seraient situés à l'intérieur des fils transversaux en U 1, la partie supérieure 1b' des fils transversaux 1 devrait être repliée vers l'intérieur du chemin de câbles de manière à ce que les axes des fils longitudinaux 3 et 4 demeurent sensiblement dans le même plan vertical.

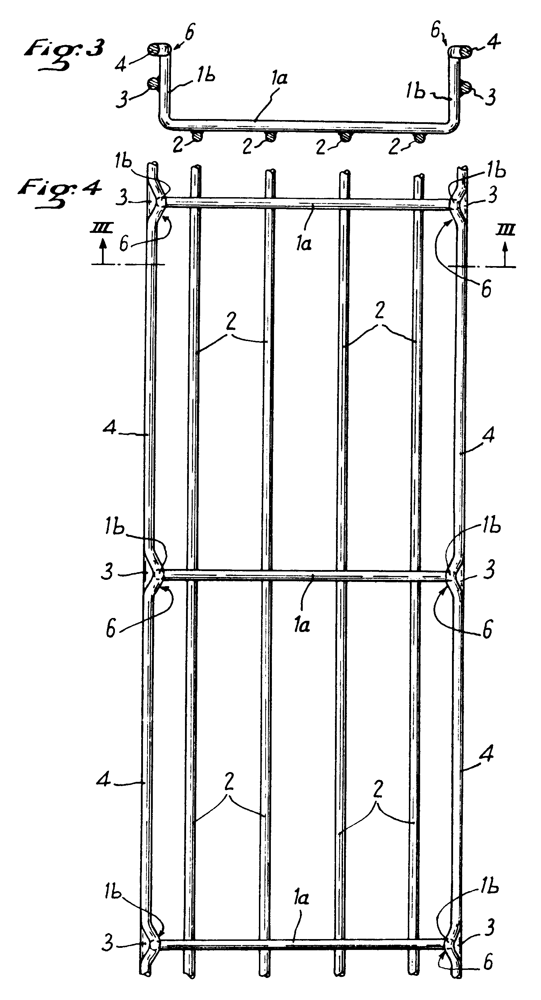

Sur les figures 3 et 4 qui représentent le second mode de réalisation de l'invention, on retrouve les fils transversaux, dont les parties verticales 1b sont rectilignes comme dans le mode de réalisation de la figure 1 et qui sont reliées entre elles par des fils longitudinaux de fond 2 et de parois verticales 3.

Comme on peut le voir clairement sur la figure 4, les fils longitudinaux de rive 4 sont déportés latéralement en 6 au niveau de chacun des fils transversaux, d'une distance correspondant sensiblement au diamètre des fils longitudinaux 3 qui, comme cela est connu, sont soudés tangentiellement contre les parties verticales 1b des fils transversaux 1.

De cette manière les fils de rive longitudinaux 4 sont soudés en 6 directement sur l'extrémité des parties verticales 1b des fils transversaux alors que la quasi totalité de la longueur des fils de rive 4 est située dans le même plan vertical que les fils longitudinaux 3 qui sont situés sur les parties verticales du chemin de câbles.

Grâce à cette caractéristique les chemins de câbles selon ce mode de réalisation peuvent être facilement empilés et leurs différentes sections peuvent être réunies par des éclisses disposées entre les fils longitudinaux 3 et 4.

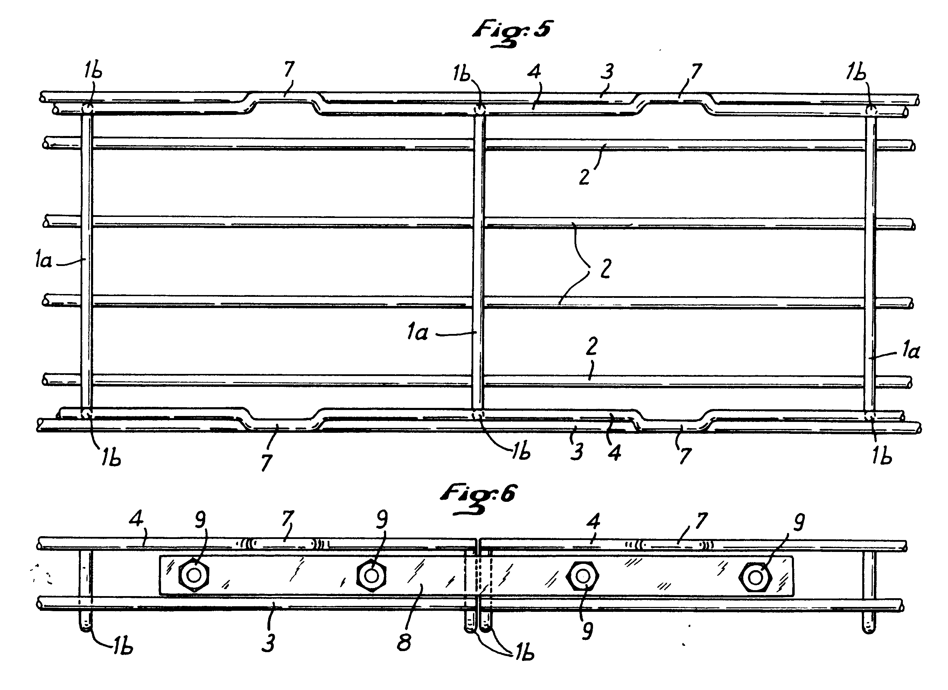

On a présenté sur les figures 5 et 6 une variante du mode de réalisation des figures 3 et 4.

Dans cette variante on retrouve les fils transversaux 1a regroupés verticalement en 1b qui supportent les fils longitudinaux 2 constituant le fond du chemin de câbles et les fils longitudinaux latéraux 3 et 4.

Comme dans le mode de réalisation des figures 3 et 4, les fils de rive 4 sont soudés sur les extrémités des parties verticales 1b des fils transversaux.

Dans le mode de réalisation décrit, les fils de rive 4 sont déportés vers l'extérieur jusqu'à la verticale des fils 3 sur uniquement certaines parties de leur longueur.

Il en résulte que les parties déportées 7 peuvent en étant situées de manière appropriée servir d'appui aux éclisses de type conventionnel qui sont utilisées pour réunir différentes sections de chemin de câbles.

On voit sur la figure 6 comment une éclisse 8 fixée par des boulons 9 à une contre éclisse s'engage entre les fils longitudinaux 3 et les parties déportées 7 du fil de rive 4, ce qui lui permet de maintenir les deux sections de chemin de câbles en alignement l'un de l'autre.

Les parties déportées 7 permettent également de plier latéralement le chemin de câbles dont le fond reste cependant dans le même plan.

On voit que grâce à l'invention, on assure de manière simple et économique la protection des arêtes coupantes que peuvent souvent présenter les extrémités sectionnées des fils transversaux 1, et ceci sans avoir à recourir à un usinage particulier et sans avoir à rapporter une pièce de protection sur les extrémités des fils transversaux, tout en continuant à réaliser le chemin de câbles à l'aide de simples fils d'acier.

On remarque également selon l'invention les fils de rive sont au moins pour partie dans le même plan vertical que les autres fils fixés sur les parties verticales du chemin de câbles et, qu'il est possible en découpant les autres fils longitudinaux, de replier un même chemin de câbles autour d'un axe vertical sans que les fils longitudinaux 2 du fond s'écartent du plan horizontal dans lequel ils se trouvent.

Il est bien entendu que les modes de réalisation qui ont été décrits ci-dessus ne présentent aucun caractère limitatif et qu'ils pourront recevoir toutes modifications désirables sans sortir pour cela du cadre de l'invention telle qu'elle est définie par les revendications qui suivent.

**Revendications**

1. Chemin de câbles réalisé en éléments d'acier soudés (1,2), du type dans lequel les éléments de rive (4) qui constituent les bords supérieurs des parties verticales du chemin de câbles sont soudés sur les extrémités (16') des fils transversaux (1), caractérisé par le fait que ledit chemin de câbles est réalisé en treillis de fils d'acier soudés (1,2), les parties verticales du chemin de câbles comportant au moins un fil longitudinal (3) soudé sur le côté des fils transversaux (1), les fils transversaux (1b') ou les fils de rive longitudinaux (4) étant repliés de manière telle que les fils de rive longitudinaux (4) se trouvent sur au moins une partie de leur longueur dans le même plan vertical que le fil longitudinal (3) qui est soudé sur le côté des fils transversaux (1) pour constituer les parois verticales du chemin de câbles.

2. Chemin de câbles selon la revendication 1, caractérisé par le fait que les parties terminales (1b') des fils transversaux (1) sont repliées de manière à ce que les fils de rive (4) soient situés sensiblement dans le même plan vertical que les autres fils longitudinaux (3) des parties verticales du chemin de câbles.

3. Chemin de câbles selon la revendication 2, caractérisé par le fait que les parties terminales (1b') des fils transversaux (1) sont repliées vers l'extérieur, et que les fils longitudinaux (3) des parties verticales autres que les fils de rive du chemin de câbles sont soudés tangentiellement à l'extérieur des parties verticales (1b) des fils transversaux (1).

4. Chemin de câbles selon la revendication 1, caractérisé par le fait que les fils de rive (4) sont déportés (6,7) de manière à ce qu'au moins certaines parties de leur longueur soient disposées sensiblement dans le même plan vertical que les autres fils longitudinaux (3) des parties verticales du chemin de câbles tandis qu'au droit des fils transversaux (1b) ces fils de rive sont soudés sur l'extrémité des fils transversaux (1b) avec une concordance sensible des axes de ces fils (1b,4) au droit des soudures.

5. Chemin de câbles selon la revendication 4, caractérisé par le fait que les fils de rives (4) sont déportés dans le plan vertical des autres fils longitudinaux (3) des parties verticales du chemin de câbles sur la plus grande partie de leurs longueurs.

6. Chemin de câbles selon la revendication 4, caractérisé par le fait que les fils de rive (4) sont déportés (7) dans le plan vertical des autres fils longitudinaux (3) des parties verticales du chemin de câbles sur seulement certaines parties de leur longueur.

**Claims**

1. Cable tract made from welded steel elements (1, 2), of the type in which the marginal elements (4) forming the upper edges of the vertical parts of the cable tract are welded to the ends (1b') of the transverse wires (1), characterised in that the said cable tract is made in the form of a latticework of welded steel wires (1, 2), the vertical parts of the cable tract comprising at least one longitudinal wire (3) welded to the side of the transverse wires (1), the transverse wires (1b') or the longitudinal marginal wires (4) being bent in such a way that the longitudinal marginal wires (4) are situated, over at least one portion of their length, in the same vertical plane as the longitudinal wire (3) which is welded to the side of the transverse wires (1) in order to form the vertical walls of the cable tract.

2. Cable tract according to Claim 1, characterized in that the end parts (1b') of the transverse wires (1) are bent in such a way that the marginal wires (4) are arranged substantially in the same vertical plane as the other longitudinal wires (3) of the vertical parts of the cable tract.

3. Cable tract according to Claim 2, characterized in that the end parts (1b') of the transverse wires (1) are bent outwards, and in that the longitudinal wires (3) of the vertical parts other than the marginal wires of the cable tract are welded tangentially to the outside of the vertical parts (1b) of the transverse wires (1)

4. Cable tract according to Claim 1, characterized in that the marginal wires (4) are offset (6, 7) in such a way that at least some portions of their length are arranged substantially in the same vertical plane as the other longitudinal wires (3) of the vertical parts of the cable tract, whilst in line with the transverse wires (1b) these marginal wires are welded to the end of the transverse wires (1b) with a substantial coincidence of the axes of these wires (1b, 4) in line with the welds.

5. Cable tract according to Claim 4, characterized in that the marginal wires (4) are offset in the vertical plane of the other longitudinal wires (3) of the vertical parts of the cable tract over the greater portion of their lengths.

6. Cable tract according to Claim 4, characterized in that the marginal wires (4) are offset (7) in the vertical plane of the other longitudinal wires (3) of the vertical parts of the cable tract over only some portions of their length.

**Patentansprüche**

1. Kabelrost aus geschweißten Stahlelementen (1, 2), von der Art, bei der auf die Seitenelemente (4), die die oberen Ränder der vertikalen Abschnitte des Kabelrostes bilden, auf deren Endabschnitte (1b') Querdrähte (1) geschweißt sind, **dadurch gekennzeichnet,** daß die Kabelroste auf in Gitterform geschweißten Edelstahldrähten (1,2) hergestellt sind, wobei die vertikalen Abschnitte des Kabelrostes zumindest einen längs erstreckten Draht (3) aufweisen, der auf die Seiten der Querdrähte (1), der Querdrähte (1b') geschweißt ist, oder die längs erstreckten Randdrähte (4) so umgebogen sind, daß sich die längs erstreckten Randdrähte (4) zumindest auf einem Abschnitt ihrer Länge in derselben vertikalen Ebene wie der längs erstreckte Draht (3) befinden, der auf die Seite der Querdrähte (1) geschweißt ist, um die vertikalen Wände des Kabelrostes zu bilden.

2. Kabelrost nach Anspruch 1, dadurch gekennzeichnet, daß die Endabschnitte (1b') der Querdrähte (1) derart nach außen gebogen sind, daß die Randdrähte (4) im wesentlichen in derselben vertikalen Ebene liegen, wie die anderen Langsdrähte (3) der vertikalen Abschnitte des Kabelrostes.

3. Kabelrost nach Anspruch 2, dadurch gekennzeichnet, daß die Endabschnitte (1b') der Querdrähte (1) nach außen gebogen sind und daß die anderen Längsdrähte (3) der vertikalen Abschnitte, anders als die Randdrähte, des Kabelrostes tangential an die Außenseite der vertikalen Abschnitte (1b) der Querdrähte (1) geschweißt sind.

4. Kabelrost nach Anspruch 1, dadurch gekennzeichnet, daß die Randdrähte (4) derart auskragend (6, 7) sind, daß wenigstens einige Abschnitte in ihrer Länge im wesentlichen in derselben vertikalen Ebene liegen, wie die längserstreckten Drähte (3) der vertikalen Abschnitte des Kabelrostes, während rechtwinklig zu den Querdrähten (1b) diene Randdrähte auf das Ende der Querdrähte (1b) im wesentlichen in Übereinstimmung mit den Achsen dieser Drähte (1b, 4) senkrecht zu den Schweißstellen geschweißt sind.

5. Kabelrost nach Anspruch 4, dadurch gekennzeichnet, daß die Randdrähte (4) in der vertikalen Ebene der anderen längserstreckten Drähte (3) der vertikalen Abschnitte des Kabelrostes über den größten Teil ihrer Länge auskragend sind.

6. Kabelrost nach Anspruch 4, dadurch gekennzeichnet, daß die Randdrähte (4) in der vertikalen Ebene der anderen längserstreckten Drähte (3) der vertikalen Abschnitte des Kabelrostes nur über gewisse Längsabschnitte derselben auskragend sind.

*Fig. 1*

*Fig. 2*

Fig. 3

Fig. 4

*Fig.5*

*Fig.6*

EP 0 298 825 B1